# EUROPEAN PATENT SPECIFICATION

(11) **EP 0 673 977 B1**
(45) Date of publication and mention of the grant of the patent: **31.05.2000**
(21) Application number: 95104330.6
(22) Date of filing: 23.03.1995
(51) Int. Cl.: C09B 29/09, C09B 41/00, C09B 67/10, C09B 67/48, C09B 29/08

(54) **Water-insoluble monoazo dye**
Wasserunlöslicher Monoazofarbstoff
Colorant monoazoique insoluble dans l'eau

(30) Priority: 25.03.1994 JP 7971294
(43) Date of publication of application: 27.09.1995
(73) Proprietor: DyStar Textilfarben GmbH & Co. Deutschland KG, 60318 Frankfurt am Main (DE)
(72) Inventor: Himeno, Kiyoshi, Hoechst Mitsubishi Kasei Co.,Ltd., Kitakyushu-shi, Fukuoka (JP); Hihara, Toshio, Hoechst Mitsubishi Kasei Co.,Ltd., Kitakyushu-shi, Fukuoka (JP); Shimizu, Yukiharu, c/o Yokohama Research Center, Aoba-ku, Yokohama-shi, Kanagawa (JP)

(56) References cited:
- EP-A- 0 019 831
- WO-A-93/23479
- CH-A- 203 952
- FR-A- 2 391 253
- JP-A- 59 096 167
- US-A- 2 007 382
- A. WHITAKER: "THE VALUE OF X-RAY POWDER DIFFRACTION ALALYSIS IN COLOUR CHEMISTRY ", SOC. DYERS COLOURISTS, GB 1986, vol. 102, 2, pages 66 to 76

## Description

The present invention relates to a monoazo dye. More specifically, it relates to a blue monoazo dye having a novel crystalline structure, which is capable of uniformly dyeing polyester fibers even under high temperature and severe dyeing conditions.

In recent years, in the dyeing industry, various rationalization has been effected to dyeing methods. For example, to dye polyester fibers with a disperse dye, it has been common to employ a jet dyeing method for cloth and a cheese dyeing method or a package dyeing method for yarns.

These dyeing methods adopt a system in which a liquid dye dispersion is forced to circulate through stationary dense layers of fibers wound into multiple layers. Accordingly, it is required more than ever that the dye particles dispersed in the dye bath are fine particles, and the dispersion stability in the dye bath is excellent. If dye particles are large, a phenomenon of filtration of dye particles through the fiber layers takes place, thus leading to problems such as irregular dyeing of the inner layer or the outer layer due to a penetration failure of the dye into the interior of the fibers or due to deposition of agglomerates, and a decrease in the fastness such as color fastness to rubbing, due to deposition of the dye only on the fiber surface.

Therefore, it is required that a dye to be used for such dyeing methods shows excellent dispersibility in the dye bath and the dispersibility is not lowered over a wide temperature range of from room temperature to a high temperature at which the actual dyeing takes place.

However, the dispersibility of a dye often tends to lower when the dye bath is brought to a high temperature, and as a result, the agglomerated dye deposits on the surface of the object to be dyed in the form of a filtration residue, as mentioned above, and the object to be dyed composed of multilayers tends to have different dyed color densities between the outer layer portion and the inner layer portion, and thus it is hardly possible to obtain a dyed product having a uniform dyed color density.

From the viewpoint of saving of energy and resources, recently, there has been a trend toward severer dyeing conditions such as ① a lower bath ratio of the dye bath (the ratio of the object to be dyed to the dye liquor has been lowered from 1:30 to 1:10), ② a lower proportion of a dispersant to be used (the ratio of the dye cake to the dispersant has been lowered from 1:3 to 1:1), and ③ a shorter time and a higher temperature for dyeing (from 1 hour at 130°C to 0.5 hour at 135°C). Each of these conditions adversely affects the dispersion stability of a dye. Accordingly, among dyes having relatively good dispersion stability under the conventional dyeing conditions, many will be regarded as having poor dispersion stability under severer dyeing conditions of recent days.

For example, a dye of the following formula (I) 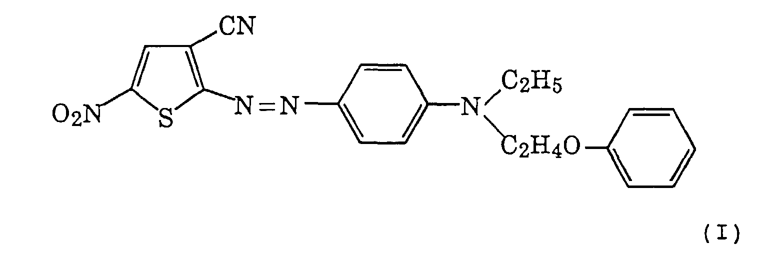 was previously developed by the present inventors (see, for example, Example 4 in Japanese Unexamined Patent Publication No. 96167/1984), and it can be prepared in accordance with a conventional method comprising only diazotization and coupling.

This monoazo dye is capable of uniformly dyeing polyester fibers under conventional mild dyeing conditions, and it is excellent in various fastness properties. However, when dyeing is conducted under severe conditions at a high temperature as mentioned above, the deterioration in the dispersibility of the dye is so much that it tends to be very difficult to obtain a dyed product having a uniform dyed color density.

Further, this dye has a problem also with respect to the compatibility with various dyeing auxiliaries. For example, its high-temperature dispersion stability is very poor in the presence of Glauber's salt (Na₂SO₄). Accordingly, when a polyester/cotton blended yarn product is dyed by a combined use of the dye with e.g. a reactive dye in the presence of Glauber's salt, non-uniform dyeing will result. Further, it has a drawback that when it is used in combination with other dyes, color deviation or irregular dyeing will result due to the poor compatibility with the mixed dye.

It is an object of the present invention to solve the above problems and to provide a dye which is capable of presenting excellent dyeing even under severe conditions such as high temperature conditions.

The present inventors have conducted extensive studies with respect to the above-described problems and as a result, have found crystals of the thiophene-type monoazo compound of the above formula (I) having a novel crystalline structure, which are distinguished from an amorphous solid obtained by the conventional usual reaction for synthesis and which are excellent in the dispersion stability even under high temperature severe dyeing conditions.

Further, it has been found that the stability of a dye composition dispersed in a high temperature dye bath depends largely on the crystallizability as well as the particle size of the dye, and the dispersion stability of the dye composition in a high temperature dye bath can be accomplished for the first time when the above compound having a novel crystalline structure is employed. The present invention has been accomplished on the basis of this discovery.

Thus, the present invention provides a water-insoluble monoazo dye of the following formula (I): 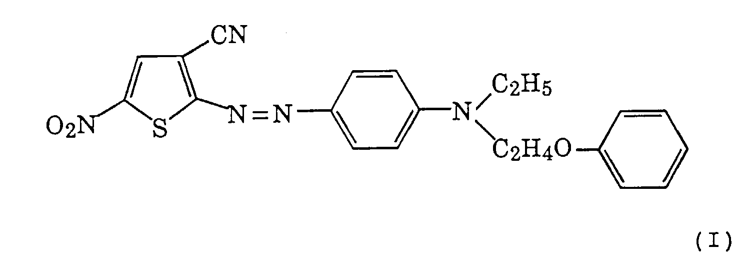 which has a crystalline structure characterized by an X-ray diffraction pattern (CuKα) showing relatively strong peaks at a diffraction angle (2θ) of about 10.6°, 14.1° and 26.5° and intermediate peaks at a diffraction angle (2θ) of about 5.2°, 21.1°, 24.1° and 27.9°.

Now, the present invention will be described in detail with reference to the preferred embodiments.

The monoazo dye of the present invention having a novel crystalline structure can be prepared in the following manner. Namely, the monoazo compound of the above formula (I) can be prepared, for example, by diazotizing 2-amino-5-nitro-3-cyanothiophene by a conventional method, followed by coupling with N-ethyl-N-phenoxyethylaniline as a coupler in a dilute sulfuric acid aqueous medium at a temperature of from -8 to 10°C, preferably from -5 to 5°C, for from 0.5 to 15 hours.

The cake of the monoazo compound obtained by this synthesis, has an amorphous structure. In the present invention, this cake is further treated under a specific condition to obtain crystals having the above-mentioned crystalline structure.

For this treatment, it is possible to employ, for example, ① a method wherein the cake having the amorphous structure is dispersed in an aqueous medium and subjected to stirring treatment at a temperature of from 60 to 130°C, preferably from 80 to 100°C, for from 0.5 to 30 hours, preferably from 1 to 10 hours, if necessary in the presence of a dispersant such as a condensate of naphthalenesulfonic acid with formaldehyde or a concentrate of a sulfite pulp waste liquor containing sodium lignin sulfonate as the main component, ② a method wherein the cake having the amorphous structure is dispersed in an organic solvent, for example, an alcohol such as methanol, ethanol or butanol, an ether such as dioxane, ethylene glycol, or glycol ether and subjected to stirring treatment at a temperature of from 15 to 100°C, preferably from 20 to 80°C, for from 0.5 to 10 hours, or ③ a method wherein 2-amino-5-nitro-3-cyanothiophene is diazotized by a conventional method, followed by coupling with N-ethyl-N-phenoxyethylaniline as a coupler in an alcoholic medium, such as methanol or ethanol, or in an aqueous medium containing more than 70 vol.% of alcohol at a temperature of from -8 to 10°C, preferably from -5 to 5°C, for from 0.5 to 15 hours.

In the accompanying drawings:
Figure 1 is a graph showing the X-ray diffraction pattern of the monoazo compound having a novel crystalline structure obtained in Example 1.
Figure 2 is a graph showing the X-ray diffraction pattern of the monoazo dye having an amorphous structure obtained in Example 1.

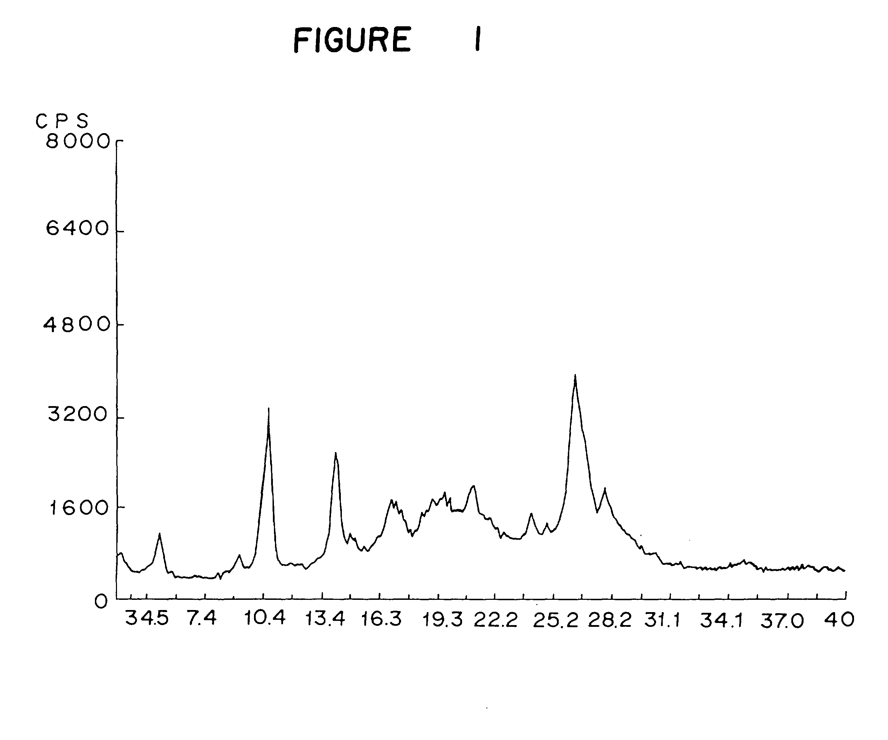

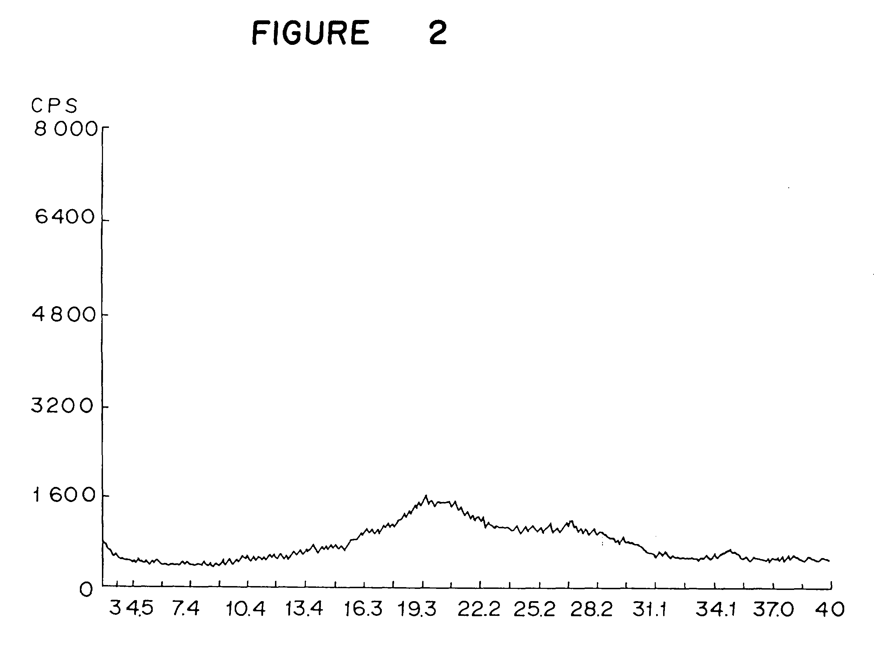

Now, the crystalline structure and the amorphous structure of the monoazo compound of the formula (I) will be described with reference to the accompanying drawings. Figures 1 and 2 show the X-ray diffraction patterns obtained by recording the states of diffraction by CuKα rays in the powder X-ray diffraction method by means of a proportional counter. In each Figure, the abscissa represents the diffraction angle (2θ), and the ordinate represents the diffraction intensity. Figure 1 shows the novel crystalline structure of the present invention, which is characterized by strong peaks at a diffraction angle (2θ) of about 10.6°, 14.1° and 26.5° and intermediate peaks at a diffraction angle (2θ) of about 5.2°, 21.1°, 24.1° and 27.9°. Figure 2 shows the conventional amorphous structure, which is distinctly different from the crystalline structure in Figure 1.

The angles of diffraction of products of the same crystal form measured by the X-ray diffraction method should always conform within an error of about ±0.1°. Therefore, these two Figures clearly show the difference in the crystallographical state. Due to the difference in the crystallographical state, the behavior of the monoazo compound during the dyeing operation is different. Namely, in the case of the present invention, excellent dyeing can be conducted even when a dyeing method at a high temperature and under severe conditions, is employed.

Fibers which can be dyed by the monoazo dye of the present invention, may, for example, be polyester fibers made of, for example, polyethylene terephthalate, polybutylene terephthalate or a polycondensate of terephthalic acid and 1,4-bis-(hydroxymethyl)cyclohexane, or blended yarn products or combined filament yarn products of such polyester fibers with fibers such as cotton, rayon-polyamide or wool fibers. To dye the polyester fibers with the monoazo dye of the present invention, a dye bath or a printing paste is prepared by dispersing the dye in an aqueous medium by using a dispersing agent such as a condensate of naphthalenesulfonic acid with formaldehyde, a higher alcohol sulfuric acid ester or a higher alkylbenzene sulfonate in accordance with a conventional method, followed by dip dyeing or textile printing. Further, in the case of dip dyeing, the above-mentioned high temperature dyeing method, a carrier dyeing method or a thermosol dyeing method may be used. Besides, even when severe dyeing conditions are used in these methods, the polyester fibers or the blended yarn products thereof can be dyed excellently, since the monoazo dye of the present invention is excellent in the dispersion stability. Specifically, the polyester fibers can be subjected to exhaustion dyeing in an aqueous medium in the presence of a dispersant under such severe conditions that the dyeing temperature is from 125 to 140°C, the dye bath ratio is not higher than 15 times, and the proportion of the dispersant to the dye is not higher than 3 times by weight.

Further, in some cases, incorporation of an acidic substance such as formic acid, acetic acid, phosphoric acid or ammonium sulfate to the dye bath can give better results.

The monoazo dye of the formula (I) of the present invention, may be used in combination with other dyes, and in some cases better results such as an improvement of the dyeability may be obtained by the combination of the dyes.

Now, the present invention will be described in further detail with reference to Examples. However, it should be understood that the present invention is by no means restricted by such specific Examples.

### EXAMPLE 1

### Preparation of dye crystals

12.1 g of N-ethyl-N-phenoxyethylaniline was emulsified in 350 mℓ of a 5% sulfuric acid aqueous solution to obtain a coupling component solution. Then, 18.5 g of 43% nitrosylsulfuric acid was added to 42.9 g of 98% sulfuric acid, and 8.45 g of 2-amino-5-nitro-3-cyanothiophene was gradually added thereto under stirring at a temperature of from -5 to 0°C for diazotization to obtain a diazotized solution. This diazotized solution was dropwise added to the above coupling component solution at a temperature of from 0 to 5°C, and the mixture was stirred for 10 hours at the same temperature. Precipitated solid was collected by filtration, washed with water and dried to obtain 12.8 g of the blue compound of the above formula (I). The powder of the monoazo dye obtained by this reaction was analyzed by an X-ray diffraction method, whereby it was found to be an amorphous substance showing the X-ray diffraction pattern of Figure 2.

Separately, another batch of the mixture of the diazotized solution and the coupling component solution was prepared, and heated to from 70 to 80°C without collecting the precipitated solid by filtration. Then, it was subjected to heat treatment at the same temperature for 5 hours and then cooled to room temperature. The precipitated solid was collected by filtration and dried. The substance obtained was analyzed by an X-ray diffraction method, whereby it was found to be the crystalline substance showing the X-ray diffraction pattern of Figure 1.

### TEST EXAMPLE 1

### Example for dyeing

0.2 g of the monoazo dye having the crystalline structure obtained in Example 1, was dispersed in 1ℓ of water containing 0.2 g of a naphthalenesulfonic acid-formaldehyde condensate and 0.2 g of a higher alcohol sulfuric acid ester, to obtain a dye bath.

In this dye bath, 100 g of polyester fiber cloth were dipped and dyed at 135°C for 30 minutes, followed by soaping, washing with water and drying, whereby the dispersibility of the dye was excellent, and the cloth was dyed uniformly. The obtained dyed cloth was blue and excellent in the light-fastness at a level of grade 6 and in the color fastness to rubbing at a level of grade 5.

A similar dyeing test was conducted by using the monoazo dye having the amorphous structure obtained during the preparation in Example 1, whereby partial agglomeration of the dye took place in the dye bath, the cloth was dyed irregularly, and the color fastness to rubbing of the dyed cloth was poor at a level of grade 1.

### TEST EXAMPLE 2

### Example for dyeing

Dyeing was conducted in the same manner as in Test Example 1 except that the amount of each of the naphthalenesulfonic acid-formaldehyde condensate and the higher alcohol sulfuric acid ester was changed to 0.6 g, the amount of water was changed to 3 ℓ, and the dyeing conditions were changed to 60 minutes at 130°C which is milder than that of Test Example 1, whereby with the dye having the crystalline structure of the present invention, dyeing was carried out as excellent as in Test Example 1, and the obtained dyed cloth was excellent in the light-fastness, at a level of grade 6 and in the color fastness to rubbing at a level of grade 5. Whereas, when the dye having the amorphous structure was employed, a slight improvement as compared in Test Example 1 was observed, but dyeing of the cloth was still irregularly, and the color fastness to rubbing was at a level of grade 3.

The water-insoluble monoazo dye having such a specific crystalline structure of the present invention is excellent in the dispersion stability even at a high temperature and under severe dyeing conditions such as the ratio of the object to be dyed to the dye liquor being 1:10, the ratio of the dye cake to the dispersant being 1:1 and the dyeing conditions being 0.5 hour at 135°C. The dyed cloth thereby obtained is excellent in the light-fastness and color fastness to rubbing. Thus, the dye of the present invention is very useful from the viewpoint of saving of energy and resources.

## Claims

1. A water-insoluble monoazo dye of the following formula (I): 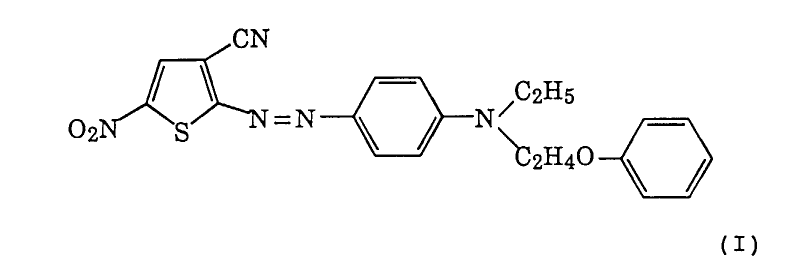 which has a crystalline structure characterized by an X-ray diffraction pattern (CuKα) showing relatively strong peaks at a diffraction angle (2θ) of about 10.6°, 14.1° and 26.5° and intermediate peaks at a diffraction angle (2θ) of about 5.2°, 21.1°, 24.1° and 27.9°.

2. A method of dyeing polyester fibers, wherein the water-insoluble monoazo dye as defined in Claim 1 is used.

3. A process for producing a water-insoluble monoazo dye as defined in Claim 1 which comprises diazotizing 2-amino-5-nitro-3-cyanothiophene, coupling the diazotized product with N-ethyl-N-phenoxyethylaniline in a dilute sulfuric acid aqueous medium at a temperature of from -8 to 10°C, for from 0.5 to 15 hours, followed by:
① stirring the reaction mixture at a temperature of from 60 to 130°C, for from 0.5 to 30 hours, or
② separating the precipitate in the reaction mixture, dispersing the precipitate (a) in an aqueous medium and stirring the mixture thus obtained at a temperature of from 60 to 130°C, for from 0.5 to 30 hours, or (b) in an organic solvent and stirring the mixture thus obtained at a temperature of from 20 to 80°C, for from 0.5 to 10 hours.

4. A process for producing a water-insoluble monoazo dye as defined in Claim 1 which comprises diazotizing 2-amino-5-nitro-3-cyanothiophene and coupling the diazotized product with N-ethyl-N-phenoxyethylaniline in an alcoholic medium or in an aqueous medium containing more than 70 vol.% of alcohol at a temperature of from -8 to 10°C, for from 0.5 to 15 hours.

## Patentansprüche

1. Wasserunlöslicher Monoazofarbstoff der nachstehenden Formel (I): 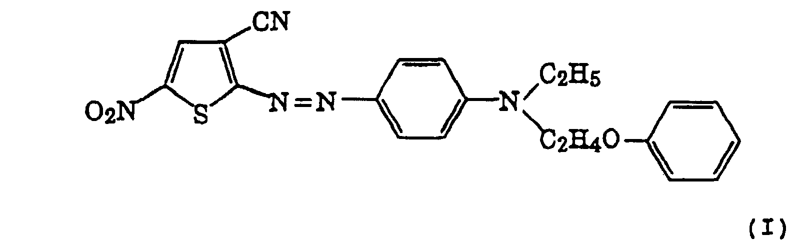 mit einer Kristallstruktur, charakterisiert durch ein Röntgenbeugungsdiagramm (CuKα) mit Maxima relativ hoher Intensität bei einem Beugungswinkel (2θ) von etwa 10,6°, 14,1° und 26,5° und Maxima mittlerer Intensität bei einem Beugungswinkel (2θ) von etwa 5,2°, 21,1°, 24,1° und 27,9°.

2. Verfahren zum Färben von Polyesterfasern, bei dem man den wasserunlöslichen Monoazofarbstoff gemäß Anspruch 1 einsetzt.

3. Verfahren zur Herstellung eines wasserunlöslichen Monoazofarbstoffs gemäß Anspruch 1, bei dem man 2-Amino-5-nitro-3-cyanothiophen diazotiert, in einem schwach schwefelsaurem Medium bei einer Temperatur von -8 bis 10°C innerhalb von 0,5 bis 15 Stunden auf N-Ethyl-N-phenoxyethylanilin kuppelt und danach:
① das Reaktionsgemisch 0,5 bis 30 Stunden lang bei einer Temperatur von 60 bis 130°C rührt oder
② den Niederschlag abtrennt und (a) in einem wäßrigen Medium dispergiert und das so erhaltene Gemisch 0,5 bis 30 Stunden lang bei einer Temperatur von 60 bis 130°C rührt oder (b) in einem organischen Lösungsmittel dispergiert und das so erhaltene Gemisch 0,5 bis 10 Stunden lang bei einer Temperatur von 20 bis 80°C rührt.

4. Verfahren zur Herstellung eines wasserunlöslichen Monoazofarbstoffs gemäß Anspruch 1, bei dem man 2-Amino-5-nitro-3-cyanothiophen diazotiert und in einem alkoholischen Medium oder in einem mehr als 70 Vol.-% Alkohol enthaltenden wäßrigen Medium bei einer Temperatur von -8 bis 10°C innerhalb von 0,5 bis 15 Stunden auf N-Ethyl-N-phenoxyethylanilin kuppelt.

## Revendications

1. Colorant monoazoïque insoluble dans l'eau de formule (I) suivante : 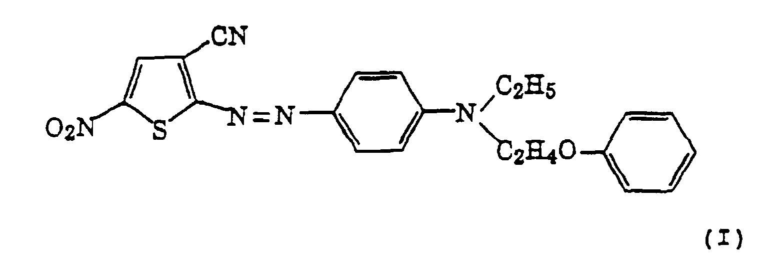 qui présente une structure cristalline caractérisée par un diagramme de diffraction des rayons X (CuKα) présentant des pics relativement importants à un angle de diffraction (2θ) d'environ 10,6°, 14,1° et 26,5° et des pics moyens à un angle de diffraction (2θ) d'environ 5,2°, 21,1°, 24,1° et 27,9°.

2. Méthode de teinture de fibres de polyester, dans laquelle on utilise le colorant monoazoïque insoluble dans l'eau tel que défini à la revendication 1.

3. Procédé de production d'un colorant monoazoïque insoluble dans l'eau tel que défini à la revendication 1, qui comprend la diazotation du 2-amino-5-nitro-3-cyanothiophène, le couplage du produit diazoté avec la N-éthyl-N-phénoxyéthylaniline dans un milieu aqueux dilué d'acide sulfurique à une température de -8 à 10°C, pendant 0,5 à 15 heures, suivi de :
① l'agitation du mélange réactionnel à une température de 60 à 130°C, pendant 0,5 à 30 heures, ou
② la séparation du précipité dans le mélange réactionnel, la dispersion du précipité (a) dans un milieu aqueux et l'agitation du mélange ainsi obtenu à une température de 60 à 130°C, pendant 0,5 à 30 heures, ou (b) dans un solvant organique et l'agitation du mélange ainsi obtenu à une température de 20 à 80°C, pendant 0,5 à 10 heures.

4. Procédé de production d'un colorant monoazoïque insoluble dans l'eau tel que défini à la revendication 1, qui comprend la diazotation du 2-amino-5-nitro-3-cyanothiophène et le couplage du produit diazoté avec la N-éthyl-N-phénoxyéthylaniline dans un milieu alcoolique ou dans un milieu aqueux contenant plus de 70% en volume d'alcool à une température de -8 à 10°C, pendant 0,5 à 15 heures.
